# EUROPÄISCHE PATENTSCHRIFT

(11) **EP 0 827 942 B1**
(45) Veröffentlichungstag und Bekanntmachung des Hinweises auf die Patenterteilung: **03.04.2002**
(21) Anmeldenummer: 97114885.3
(22) Anmeldetag: 28.08.1997
(51) Int. Cl.: C04B 37/00

(54) **Verfahren zum dauerhaften Verbinden von wenigstens zwei Bauteilkomponenten zu einem Formkörper**
Method of joining permanently at least two structural members into one shaped body
Procédé pour lier permanent au moins deux éléments de construction dans un corps moulé

(30) Priorität: 06.09.1996 DE 19636223
(43) Veröffentlichungstag der Anmeldung: 11.03.1998
(73) Patentinhaber: Deutsches Zentrum für Luft- und Raumfahrt e.V., 53175 Bonn (DE)
(72) Erfinder: Krenkel, Walter, 71272 Renningen (DE); Kochendörfer, Richard, 70619 Stuttgart (DE)
(74) Vertreter: Grimm, Ekkehard, Dipl.-Phys.

(56) Entgegenhaltungen:
- EP-A- 0 049 447
- EP-A- 0 357 491
- DE-A- 4 438 456

## Beschreibung

Die vorliegende Erfindung betrifft ein Verfahren gemäß Anspruch 1 zum dauerhaften Verbinden von wenigstens zwei Bauteilkomponenten zu einem SiC-haltigen Formkörper.

Die Druckschrift EP 0357 491 A2 beschreibt ein Verfahren zum integralen Verbinden von zwei Körpern aus Siliziumkarbid. Die Ausgangskörper, die eingesetzt werden, sind sogenannte keramische Grünkörper, d.h. Körper, die bereits SiC in Pulverform enthalten. Die Erhitzung einer zwischen den Ausgangskörpern eingebrachten Paste, die ein härtbares Harz und zusätzlich C-Pulver und/oder SiC-Pulver enthält, erfolgt auf eine Temperatur, die das Harz härtet, z.B. 500°C. Die so zu einem integralen Körper verbundenen Ausgangskörper werden danach einer Temperatur von 1.550°C ausgesetzt, um die Sinterung des SiC zu einem integralen Körper zu bewirken, wobei während der Sinterung die integral verbundenen Ausgangskörper noch mit geschmolzenem Si in Kontakt gebracht werden können, um ein reaktives Sintern zu bewirken.

Die DE-A-29 22 953 beschreibt das Verbinden zweier Siliziumkarbidbauteile, die durch Silizieren eines Kohlenstoffgerüsts vorgefertigt sind. Im Bereich der Verbindungsstelle wird zwischen die beiden zu verbindenden Flächen der Bauteile eine Paste aus Mehl, Kohlenstoff, Aktivkohle und Kasein zwischengefügt. Die Paste wird dann zu einem Kohlenstoffskelett erhitzt und dieses Kohlenstoffskelett anschließend bei einer Temperatur von mindestens 1.800 °C Silizium ausgesetzt. Das Silizium durchsetzt das Kohlenstoffskelett unter Bildung von Siliziumkarbid.

Aus der DE-A-44 38 456 ist ein Verfahren zur Herstellung einer Reibeinheit bekannt, bei dem ein poröser Kohlenstoffkörper bereitgestellt und mit flüssigem Silizium bei einer Temperatur im Bereich von 1.410 °C bis 1.700 °C in einer eingestellten Atmosphäre infiltriert wird. Dieser Körper wird mit einem weiteren Körper über eine im wesentlichen hochtemperaturbeständige Verbindungsschicht verbunden, wobei der Kohlenstoffkörper einen Reibkörper und der andere Körper einen Kernkörper bildet. Die Verbindungsschicht ist hierbei im wesentlichen aus Siliziumkarbid gebildet. In einer Ausführung kann in die Verbindungsschicht ein Schlickerzusatz eingebracht werden, der aus einem organischen Bindemittel mit einem Restkohlenstoffgehalt von mindestens 40% und einem feinkörnigen Pulver aus Kohlenstoff und/oder Silizium gebildet ist, wobei der Bindemittelanteil zwischen 10 und 50% beträgt. Als Bindemittel kann hierbei Phenol eingesetzt werden.

Weiterhin ist aus der DE-A-35 40 290 eine Kohlemstoff-Kohlenstoff-Verbundscheibe bekannt, die aus zwei oder mehr Komponeten auf Kohlenstoffbasis gebildet ist. Die Baukomponenten werden mittels einer Zwischenschicht miteinander verbunden, die aus einem metallischen Material, wie beispielsweise ein Hartlot, oder aus einem nicht metallischen Material, wie beispielsweise Pech, bestehen kann.

Ausgehend von dem vorstehend angeführten Stand der Technik liegt der Erfindung die Aufgabe zugrunde, ein Verfahren, wie es vorstehend angegeben ist, dahingehend auszugestalten, daß eine hochtemperaturbeständige Verbindung entsteht, die praktisch artgleich mit den Materialien der Bauteilkomponenten ist, einschließlich der Gefügestruktur, bei hoher Festigkeit, und die keine sogenannten "eingefrorenen Eigenspannungen" besitzt.

Gelöst wird die Aufgabe durch ein Verfahren gemäß Anspruch 1.

Mit dieser Verfahrensweise einer Verbindung zweier kohlenstoff-faserverstärkten Bauteilkomponenten, zumindest einer kohlenstoff-faserverstärken Bauteilkomponente mit einem weiteren Bauteil, wird eine hochtemperaturbeständige Verbindung erzielt, wobei eine einheitliche Gefügestruktur auch im Bereich der Verbindungsstelle erreicht wird, da die Paste in ihren Eigenschaften und ihrem Aufbau, nach der Pyrolyse, den BauteilKomponenten entspricht. Das heißt, auch im Bereich der Paste wird eine Mikrorißstruktur erzeugt, in dem das kohlenstoffhaltige, organische Bindemittel (kohlenstoffhaltiger Precursor) der aufgebrachten Paste nach der Pyrolyse ein Mikrorißsystem beläßt, das, durch die Menge des Bindemittels definiert, auch in der Schichtung und der Orientung, insbesondere unter Zugabe von Kohlenstoff-Fasereinlagen, definiert ausgebildet werden kann. Mit dem erfindungsgemäßen Verfahren wird die Möglichkeit gegeben, karbonfaserverstärkte Bauteilkomponenten miteinander fest zu verbinden, ohne daß die Fügestellen eine Schwächung des Formkörpers bewirken. Da es bekannt ist, daß karbonfaserverstärkte Formkörper nicht beliebig spanabhebend bearbeitet werden können, müssen Formkörper mit einer komplexen Struktur aus mehreren einzelnen Bauteilkomponenten, die vorgefertigt sind, und die im wesentlichen den Endabmessungen entsprechen, zusammengesetzt werden, was gerade durch die erfindungsgemäßen Maßnahmen erleichtert wird. Für eine dauerhafte, hoch feste Verbindung zwischen zwei Bauteilkomponenten werden demzufolge, unter Einsatz des erfindungsgemäßen Verfahrens, keine artfremden Verbindungselemente, wie beispielsweise metallische oder keramische Schrauben oder andere Verbindungselemente, benötigt.

Unter kohlenstoff-faserverstärkter Komponente ist insbesondere eine solche zu verstehen, die als kohlenstoff-faserverstärkte Kohlenstoffkomponente oder C/C-Komponente bezeichnet wird, d.h. ein Kohlenstoffgerüst, das mit zusätzlichem Kohlenstoff gefüllt ist.

Bevorzugt wird als Bindemittel in der Paste ein Phenolharz verwendet. Durch dieses Phenolharz wird sichergestellt, daß die Mikrorißstruktur derjenigen entspricht, die zumindest die eine Bauteilkomponente aufweist. Üblicherweise werden solche kohlenstoff-faserverstärkten Bauteilkomponenten dadurch hergestellt, daß ein mit einem Bindemittel überzogenes Kohlenstoff-Fasergerüst oder -skelett bereitgestellt und das Bindemittel pyrolysiert wird, so daß sich ein Mikrorißsystem ausbildet. Das Mikrorißsystem der jeweiligen Bauteilkomponenten, die verbunden werden sollen, und das Kohlenstoffgerüst, das nach Pyrolysieren der Paste verbleibt, bildet dann einen einheitlichen Vorkörper, der nach Infiltration von flüssigem Silizium bei einer entsprechenden Temperatur unter Bildung von Siliziumkarbid eine durchgehende, mit Siliziumkarbid durchzogene Struktur darstellt, die sich durch eine besonders hohe Festigkeit auszeichnet.

Für das Kohlenstoffpulver der Paste sollte eine Teilchengröße unterhalb 10 µm, jedoch nicht größer als 50% der Breite des Fügespalts, verwendet werden. Durch ein solches feines Kohlenstoffpulver wird bewirkt, im Gegensatz zu einem Pulver mit einer groberen Teilchengröße, daß sich ein sehr fein verteiltes Rißmuster bildet, außerdem wird feiner Kohlenstoff, vorzugsweise mit einer Teilchengröße unterhalb 6 um, in dem System gleichmäßig verteilt bereitgestellt, das sich mit dem infiltrierten Silizium zu Siliziumkarbid umwandelt.

Eine Trocknung oder Aushärtung der Paste kann vor der Pyrolyse bei einer Temperatur von mindestens 100°C bis 150°C erfolgen, vorzugsweise für eine Dauer von 60 bis 120 Minuten, wobei die Aushärtetemperatur und die Dauer auch von der Größe der Bauteilkomponenten abhängig ist. Mit einer solchen Härtung sind die beiden Bauteilkomponenten über die ausgehärtete Paste ausreichend vorfixiert, so daß eine weitere aufwendige Fixierung der Bauteilkomponenten während des Pyrolysierens und Infiltrierens von flüssigem Silizium nicht erforderlich ist.

Falls im Bereich der Fügestelle oder an Stellen, an denen zwei Bauteilkomponenten über einen größeren Abstand miteinander verbunden werden sollen, d.h. eine Spaltbreite von über 80 um überbrückt werden muß, werden in diesen Fügespalt oder diese Überbrükkungsstelle Kohlenstoff-Fasern, insbesondere in Gewebe- oder Filzform, eingebracht. Solche Kohlenstoff-Fasern, beispielsweise in Gewebe- oder Filzform, können im Bereich der Fügestelle durch die Paste fixiert werden oder zuvor mit Paste ausreichend imprägniert sein.

Für Fügespaltbreiten bis etwa 150 um werden die Kohlenstoff-Fasern in den Fügespalt in Filzform eingebracht, während vorzugsweise in Fügespaltbreiten oberhalb von 150 µm die Kohlenstoff-Fasern in Gewebeform oder Gewirkeform eingebracht werden. Gerade mit solchen Einlagen aus Kohlenstoff-Fasern in Filzform oder Gewebe/Gewirkeform können Unebenheiten im Bereich des Fügespalts besser angepaßt werden. Weiterhin sollte dann, wenn eine der zu verbindenden Bauteilkomponenten aus Kohlenstoff-Fasern in Filzform oder in Gewebe oder Gewirkeform aufgebaut ist, im Falle einer Einlage von Fasern in den Fügespalt eine solche Kunststoff-Faserlage gewählt werden, die bereits in dem Bauteil verwendet wurde, d.h. die mit den Faserlagen des Bauteils artgleich sind.

Eine vorzugsweise Zusammensetzung der Paste besteht aus 80 - 85% Gew.-% Bindemittel mit einem Kohlenstoffgehalt von 50% nach der Pyrolyse und 15 bis 20 Gew.-% Graphitpulver mit einem durchschnittlichen Durchmesser von 4 µm.

Für die Pyrolysierung der Paste sollte eine Temperatur von etwa 900 °C eingestellt werden. Die Pyrolysierung der Paste findet im wesentlichen in einem Bereich von 600°C bis 1.200°C statt, wobei die Reaktionsgeschwindigkeit und die entstehende Gasmenge von dem verwendeten Bindemittel abhängig ist. Durch die Pyrolyse wird ein Mikrorißsystem gebildet, das dann anschließend, wie bereits ausgeführt, mit flüssigen Silizium infiltriert wird, das zu Siliziumkarbid konvertiert wird. Die Pyrolyse kann in einem gesonderten Verfahrensschritt erfolgen. Es hat sich jedoch als verfahrensökonomisch erwiesen, die Pyrolyse unmittelbar vor dem eigentlichen Infiltrationsschritt vorzunehmen, in dem die zu verbindenden Bauteile mit der Zwischenschicht auf eine Temperatur von oberhalb 1.400°C aufgeheizt werden, so daß im Rahmen der Aufheizphase die Pyrolysierung der Paste erfolgt. Der Einsatz von Phenolharz als Bindemittel in der Paste hat den Vorteil, daß die Pyrolyse bereits bei etwa 900°C erfolgt und eine Umwandlung zu 70% in Kohlenstoff stattfindet.

Die Pyrolyse wird bevorzugt unter einer Stickstoff-Atmosphäre durchgeführt.

Weiterhin sollte ein ausreichends Vakuum angelegt werden, und zwar im Bereich von 10⁻³ bis 10⁻⁶ bar (100 - 0,1Pa), was insbesondere den Vorteil mit sich bringt, daß eine Oxidation unterbunden wird und Lufteinschlüsse entfernt werden.

Im Rahmen der Infiltrierung des flüssigen Siliziums kann das flüssige Silizium über die kohlenstoff-faserverstärkte Bauteilkomponente zugeführt werden. Die Silizierung des flüssigen Siliziums erfolgt nur durch Kapillarkräfte innerhalb der Materialstruktur bzw. des Mikrorißsystems, was zu einer gleichmäßigen Durchsetzung des Mikrorißsystems mit flüssigem Silizium führt. Insofern wird die Infiltrationsgeschwindigkeit nur durch die Kapillarkräfte bestimmt und sollte nicht beeinflußt werden.

Bevorzugt sollte der Kohlenstoffgehalt im Bereich des Fügespalts vor der Pyrolyse so eingestellt werden, daß der gesamte Restkohlenstoff nach der Pyrolyse im Bereich des Fügespalts zwischen 50 und 70 Gew.-% beträgt.

Überraschenderweise wurde festgestellt, daß die Scherfestigkeit an der Verbindungsstelle zwischen zwei kohlenstoff-faserverstärkten Bauteilkomponenten dadurch erhöht werden kann, wenn zumindest eine der Verbindungsflächen, im Bereich derer die Paste aufgebracht wird, geschliffen wird. Gegenüber unbearbeiteten Verbindungsflächen an den zu verbindenden Bauteilkomponenten kann die Haftfestigkeit dann erhöht werden, wenn eine der beiden zu verbindenden Oberflächen geschliffen wird, die andere jedoch ungeschliffen verbleibt. Eine weitere Erhöhung der Haftfestigkeit ist dann zu erzielen, wenn zusätzlich, zwischen die eine geschliffene Oberfläche und die andere ungeschliffene Oberfläche, ein Kohlenstoff-Faserfilz eingefügt wird, wobei die Dicke des Filzes zwischen 80 µm und 180 µm liegen sollte. Unter einem Filz ist ein Material zu verstehen, bei dem die Kohlenstoff-Fasern lose und ungerichtet aufgeschüttet sind.

Falls anstelle eines solchen Filzmaterials ein Gewebe oder ein Gewirke aus Kohlenstoff-Fasern eingefügt wird, kann eine weitere Steigerung der Scherfestigkeit erzielt werden, wie anhand der nachfolgenden Beschreibung von Ausführungsbeispielen noch ersichtlich werden wird.

Weitere Einzelheiten und Merkmale der Erfindung ergeben sich aus der nachfolgenden Beschreibung von Ausführungsbeispielen anhand der Zeichnung.

In der Zeichnung zeigt:
- Figur 1: einen schematischen Aufbau eines getesteten Bauteils mit zwei Bauteilkomponenten,
- Figuren 2A bis 2C: jeweils einen Schnitt durch die Verbindungsstelle des Bauteils, wie es in Figur 1 dargestellt ist, mit unterschiedlich bearbeiteten Oberflächen der Bauteile im Bereich der Verbindungsstelle,
- Figur 3: ein Testgerät, das zur Durchführung von Kompressionstests verwendet wurde,
- Figur 4: eine Darstellung, die den Einfluß der Verbindungsmaterials und der Oberflächenbehandlung auf die Scherfestigkeit darstellt,
- Figur 5: eine Schliffbilddarstellung einer nach dem erfindungsgemäßen Verfahren hergestellten Verbindung, die mittels Paste und einer darin eingelegten Gewebeschicht hergestellt ist, und
- Figur 6: eine graphische Darstellung, die den Einfluß der Prüftemperatur auf die Scherfestigkeit von überlappend verbundenen Bauteilen, die mit Paste verbunden sind, darstellt.

Um die nach dem erfindungsgemäßen Verfahren hergestellten Formkörper zu untersuchen und zu testen, wurden umfangreiche Versuche durchgeführt.

Zunächst wurden Kohlenstoffplatten mit den Dimensionen 300 mm x 300 mm x 3 mm aus sogenannten CFRP-Laminaten (carbon fiber reinforced plastics kohlenfaserverstärkte Kunststoffe) über Pyrolyse bei 900°C hergestellt. In der nachfolgenden Tabelle 1 ist das Material der so vorbereiteten Kohlenstoffplatten charakterisiert.

**Tabelle 1**

| | |
|---|---|
| Dichte | 1,4 g/cm³ |
| offene Porosität | 17-21 % |
| Faservolumenanteil | 55-65 % |
| Verstärkung | zweidimensionales Gewebe aus Kohlenstoff-Fasern |

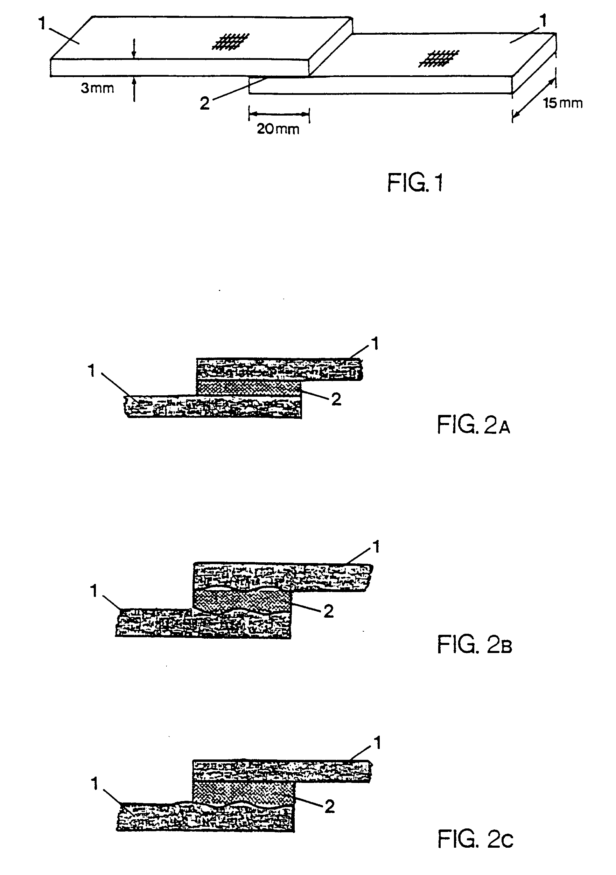

Nach der Pyrolyse wurden die Platten in Teile mit den Dimensionen 110 mm x 50 mm x 3 mm unterteilt und im Bereich der zu verbindenden Flächen für weitere Versuche vorbereitet, wie dies nachfolgend noch beschrieben wird. Jeweils zwei dieser Teile 1 wurden, wie in Figur 1 schematisch dargestellt ist, darauffolgend an ihren Enden über einen Bereich von 20 mm in der Längserstreckung überlappend verbunden, indem in den Fügespalt 2 entweder eine reine Paste oder aber Paste mit zusätzlichem Kohlenstoff-Faserfilz oder mit zusätzlichem Kohlenstoff-Faser-Gewebe oder Gewirke eingefügt wurde. Nach einer Aushärtung in Luft bei 135°C für 1,5 Stunden waren die Bauteile 1 gegeneinander unverrückbar fixiert. Danach wurde die Paste bei 900 °C unter Stickstoff pyrolysiert und oberhalb 1.400°C wurde die Silizierung mit flüssigem Silizium unmittelbar anschließend durchgeführt. Aus jedem so gebildeten Formkörper wurden dann sechs Streifen geschnitten, so daß aus jeder Einzelprobe sechs Teilstücke für nachfolgende Tests zur Verfügung standen.

Vorversuche zeigten, daß ein vollständiges Füllen des Fügespalts im Bereich der Verbindung mit geschmolzenem Silizium ohne irgendein zusätzliches Bindematerial zu keinen zufriedenstellenden Ergebnissen führte. Analysen der Verbindungsstellen nach den entsprechenden Scher- und Abreißtests zeigten, daß nur lokale Stellen des Verbindungsbereichs verbunden waren. Dies ist unter anderem darauf zurückzuführen, daß nicht in allen Bereichen eine SiC-Bildung vorzufinden war. Dies führt zu einer niedrigen Festigkeit mit einer äußerst schlechten Reproduzierbarkeit. In den Versuchen wurde zunächst dasselbe Kunstharz verwendet, das auch in der Precursor- bzw. Binder-Matrix bei dem Herstellen der Kohlenstoff-Bauteilkomponenten eingesetzt wurde. Es zeigte sich, daß das Kunstharz in seiner reinsten Form zur Verwendung als Bindematerial aufgrund seiner geringen Viskosität ungeeignet war, da es einfach durch das poröse Kohlenstoffmaterial der Bauteilkomponenten absorbiert wurde. Um die Viskosität des Bindematerials zu erhöhen, wurde daher das Harzmaterial durch die Zugabe von Graphitpulver zu einer Paste eingedickt. Deshalb wurde zusätzliches Kohlenstoff-Bindematerialien in Form von Kohlenstoff-Pulver in die Paste eingefügt, das als reaktiver Füller zum Erzeugen einer SiC-Bildung mit dem filtrierten Silizium umgewandelt wurde. Als besonders geeignet wurde eine Paste befunden, die die nachfolgende Zusammensetzung gemäß Tabelle 2 aufweist:

**Tabelle 2**

| Bestandteile | Bindeharz | Feststoff-Füller |
|---|---|---|
| Materialien | Phenol-Precursor JK 27 | Graphitpulver mit einem durchschnittlichen Partikeldurchmesser von 4 µm |
| C-Gehalt | 50 % | 100 % |
| Menge [Gew.-%] | 80 - 85 % | 20 - 15 % |

Es ist anzumerken, daß vorzugsweise das Bindeharz, wie es vorstehend in der Tabelle 2 aufgeführt ist, auch als Material zum Füllen der zwei Bauteilkomponenten, die aus dem Kohlenstoffgerüst hergestellt sind, eingesetzt werden sollte.

Grundsätzlich kann die Viskosität der Paste bei Raumtemperatur zwischen 5 bis 5.000 m·Pa·s eingestellt werden. Im Hinblick auf eine gewisse Zähigkeit, auf die die Paste eingestellt werden sollte, sollte die Viskosität der Paste im Bereich von 2.000 bis 5.000 m·Pa·s eingestellt werden, und zwar im wesentlichen durch Zugabe entsprechender Mengen an Kohlenstoffpulver.

Weiterhin wurde herausgefunden, daß eine Präparation der Oberflächen der Bauteile an der Verbindungsstelle vor dem Verbinden einen großen Einfluß auf die Festigkeit der Verbindung besitzt. Normalerweise zeigt das Kohlenstoffmaterial der Bauteilkomponenten nach der Herstellung eine rauhe und wellige Oberfläche aufgrund der Kohlenfaser, die das Grundgerüst des jeweiligen Bauteilelements bildet. Aus diesem Grund wurde zum einen im Bereich der Verbindung in einem Versuch die Oberfläche des einen Bauteils geschliffen, während die andere Oberfläche im Bereich der Verbindungsstelle unbearbeitet belassen wurde, d.h. wesentlich rauher als die geschliffene Oberfläche. In einem weiteren Versuch wurden beide Oberflächen im Bereich der Verbindungsstelle geschliffen. Schließlich wurde noch die Breite des Fügespalts variiert.

Zum Schleifen der jeweiligen Verbindungsflächen im Bereich des Fügespalts wurden Diamantschleifscheiben mit einer Korngröße von etwa 125 bis 150 µm eingesetzt. Üblicherweise besitzt ein kohlenstoff-faserverstärkter Kohlenstoffkörper, aufgrund der Struktur der Kohlenstoff-Fasern, eine Rauhtiefe von 20 bis 30 µm und mehr (nach einer Pyrolyse), was auch stark abhängig von der Webart des eingesetzten Kohlenstoff-Fasermaterials ist. Im Gegensatz dazu wurde nach dem Beschleifen der Oberfläche im Bereich des Fügespalts eine Rauhtiefe von 3 bis 10 um, in bestimmen Fällen auch zwischen 2,5 und 6,5 µm, erzielt.

Die verschiedenen Versuchsanordnungen sind in den Figuren 2A, 2B und 2C schematisch dargestellt. Figur 2A zeigt eine Verbindungsstelle, bei der zwei Bauteile 1 über eine Zwischenschicht 2 miteinander verbunden sind, wobei die beiden Verbindungsflächen im Bereich der Zwischenschicht 2 jeweils geschliffen sind. In Figur 2B sind die beiden Verbindungsflächen Bauteile 1 ungeschliffen, während in der Anordnung der Figur 2C die Verbindungsfläche des oberen Bauteils 1 geschliffen ist, während die Verbindungsfläche des unteren Bauteils 1 ungeschliffen belassen wurde.

Die Ergebnisse sind in der nachfolgenden Tabelle 3 dargestellt. Die Variationsbereiche der Fügespaltbreite in Bezug auf Paste, Paste und Filz,und Paste und Gewebe in dem Fügespalt, sind in der nachfolgenden Tabelle 3 dargestellt. Gleichzeitig stellen die jeweiligen Fügespaltbreitenbereiche diejenigen Bereiche dar, in denen ausreichend feste und zufriedenstellende Verbindungen mit dem jeweiligen in dem Fügespalt eingefügten Material erzielt wurden.

**Tabelle 3**

| | Fügespaltbreite (µm) | | |
|---|---|---|---|
| Material im Fügespalt | beide Bauteilflächen geschliffen | beide Verbindungsflächen ungeschliffen | kombinierte geschliffene und ungeschliffene Verbindungsflächen |
| Paste | ≤ 20 | ≤ 80 (≤ 120) | ≤ 80 (≤ 100) |
| Paste + Filz | 80-130 | 100-160 | 110-150 |
| Paste + Gewebe | 200-250 | 200-350 | 150-250 |

Nach der Vorbereitung der Oberflächen an der Verbindungsstelle, wie dies jeweils in der vorstehenden Tabelle 3 angegeben ist, wurde die Spaltbreite des Fügespalts exakt eingestellt, indem die beiden Bauteilkomponenten in einer Hilfsanordnung festgeklemmt wurden. Die Paste, die eingesetzt wurde, entsprach derjenigen, die vorstehend in der Tabelle 2 spezifiziert ist. Nachdem die Bauteilkomponenten fixiert waren mit dem dazwischengefügten Verbindungsmaterial, wurde die Paste für 1,5 Stunden bei 135°C in Luft gehärtet, um die beiden Kohlenstoff-Bauteilkomponenten aneinander zu fixieren. Danach wurde die Silizierung, d.h. die Infiltration des Mikrorisse aufweisenden Körpers, bei 1.500°C unter Vakuum durchgeführt, so daß eine Reaktion zwischen dem flüssigen Silizium und der Kohlenstoffmatrix unter Bildung von Siliziumkarbid erfolgte. Die unter den unterschiedlichen Parametern miteinander verbundenen, kohlenstoff-faserverstärkten Bauteilkomponenten wurden dann in Stücke unterteilt, um die Festigkeit der Verbindung zu prüfen.

Die Parameter, die für den Verbindungsvorgang eingehalten wurden, sind in der nachfolgenden Tabelle 4 aufgeführt.

**Tabelle 4**

| Präparation der Verbindungsfläche (falls vorgenommen) | Schleifen des carbonfaserverstärkten Bauteils (reines Kohlenstoffbauteil) im Bereich der Verbindungsfläche mit einer Diamantscheibe |
|---|---|
| Verbindungsmaterial | dünne Schicht einer Paste; optional mit Kohlenstoff-Faserfilz oder mit einem Kohlenstoff-Fasergewebe |
| Härten | 135°C/ 1,5 Stunden in Luft |
| Silizieren | 1.500°C (Vakuum) |
| Herstellung von Probeteilen | Zersägen mit einem Diamantsägeblatt |

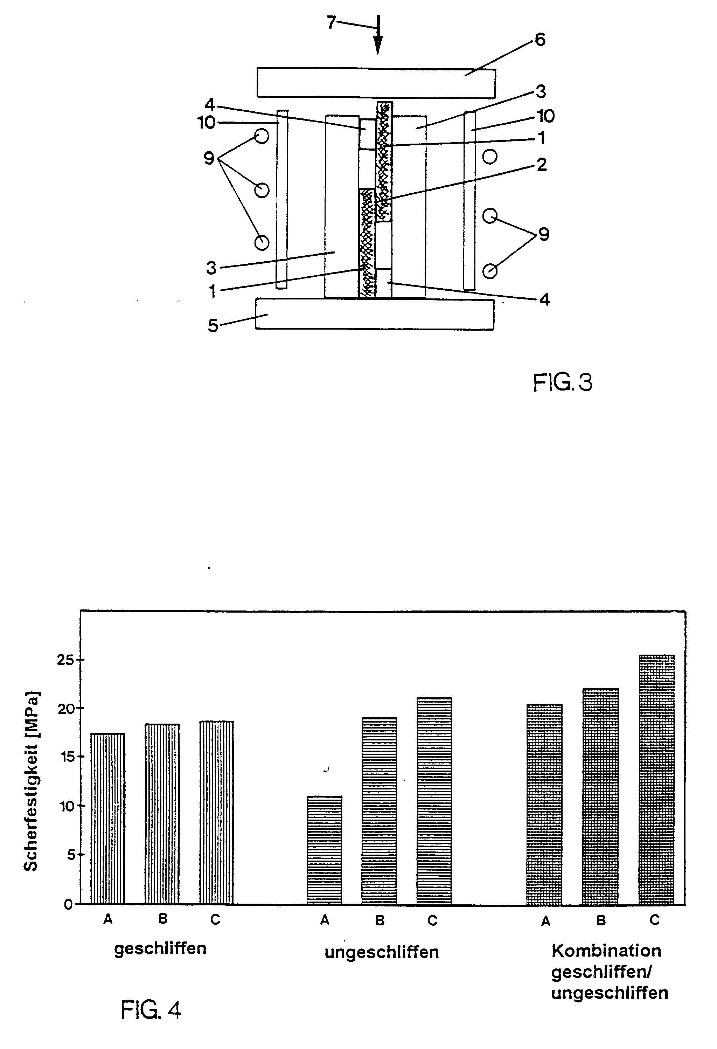

Die miteinander verbundenen Bauteilkomponenten wurden dann in einem Testgerät getestet, wie es in Figur 3 dargestellt ist. Die beiden Bauteilkomponenten, mit den Bezugszeichen 1 und 1 bezeichnet, wurden zwischen zwei Halteplatten 3 eingespannt, wobei im oberen und im unteren Bereich jeweils ein Distanzteil 4 eingefügt wurde. Die eine Bauteilkomponente 1 wurde auf eine untere Druckplatte 5 aufgelegt, während die obere Bauteilkomponente 1 über die Stirnseiten der beiden Halteteile 3 vorstand. In dieser Anordnung wurde dann die obere Stempelplatte 6 in Richtung des Pfeils 7 nach unten bewegt und die aufgewandte Kraft wurde gemessen, die notwendig war, um die beiden Bauteilkomponenten 1 und 2 im Bereich der Verbindungsstelle bzw. Verbindungsschicht 2 abzuscheren. Zusätzlich war um die Anordnung herum eine Induktionsheizung 9 angeordnet, um während einiger Scherversuche die Bauteilkomponenten auch zu beheizen, um den Einfluß der Temperatur auf die Festigkeit der Verbindungsstelle zu überprüfen.

Zur Anaylse der Verbindungsstelle vor dem Scherversuch wurden die unterschiedlich verbundenen Bauteilkomponenten, nach der Silizierung, mittels Röntgenstrahlen untersucht, um einen Aufschluß über die homogene Verteilung des Siliziums im Bereich der Verbindungsstelle nach Fertigstellung des Formkörpers zu prüfen. Der Grad einer Siliziumkarbidumwandlung wurde qualitativ durch elektronenmikroskopische Abtastung (REM) und eine Energiedispersions-Anaylse mittels Röntgenstrahlen (EDX) vorgenommen. Mittels der induktiven Heizeinrichtung 9 konnte die Festigkeit der Verbindungsstelle 2 unter Raumtemperatur bis zu Temperaturen von 1.500°C bestimmt werden. Die Halteteile 3, aus zu den Bauteilkomponententen 1 artgleichem Kohlenstoff-Siliziumkarbid-Material hergestellt, dienten auch als Schutz gegen ein Abflachen oder ein Wölben, so daß über solche Verformungen keine Kräfte auf die Verbindungsstelle aufgebracht werden konnten. Weiterhin wurde das Testteil lose in der Halteanordung fixiert, damit keine Reibungskräfte während des Tests auf die Teile übertragen wurden. Um im Rahmen der Einwirkung der Wärme auf die Verbindungsstelle in dem Testgerät eine gleichmäßige Temperaturverteilung zu erreichen, war zwischen der Induktionsheizung 9 und dem Halteteil 3 ein Wandteil 10, die Halteanordnung umschließend, aus zu den Bauteilkomponenten 1 artgleichem Material (Kohlenstoff-Siliziumkarbid) eingesetzt. Im Rahmen der Temperaturversuche wurde mit einer Rate von 150°C/min. aufgeheizt und die Temperatur mit zwei Pyrometern, zum einen an dem Kohlenstoff-Behälter 10 und zum anderen an der Verbindungsstelle 2, gemessen. Nachdem die verbundenen Bauteilkomponenten 1 eine konstante Temperatur, im Rahmen des Temperaturversuchs, erreicht hatten, wurde der Scherfestigkeitstest durchgeführt.

Die jeweilige Scherfestigkeit der Verbindungsstelle 2 der getesteten Bauteilkomponenten 1 wurde aus dem Quotient der Endkraft und der Verbindungsflächenbereiche berechnet und von 11 bis 25 MPa, und zwar in Abhängigkeit von den Verbindungsparametern.

Der Einfluß der zusätzlich in die Paste eingegebenen Kohlenstoff-Fasern, zum einen in Form einer Filzmatte oder zum anderen in Form eines Gewebes bzw. Gewirkes, sowie die Vorbereitung der Oberflächen im Bereich der Verbindungsstelle, ist in Figur 4 dargestellt, wobei die Balken wie folgt zuzuordnen sind:
A - nur Paste als Verbindungsmaterial
B - Filzmatte aus Kohlenstoff-Fasern, mit Paste getränkt als Verbindungsmaterial
C - Gewebematte aus Kohlenstoff-Fasern, mit Paste getränkt als Verbindungsmaterial.

Die ersten drei Balken A, B, C zeigen die jeweiligen Scherfestigkeiten mit beiden Verbindungsflächen geschliffen, die zweite Balkengruppe zeigt die erzielten Scherfestigkeiten mit beiden Verbindungsflächen ungeschliffen, während die letzte Balkengruppe die Scherfestigkeit einer Verbindung darstellt, bei der die Oberfläche der einen Bauteilkomponente im Bereich der Verbindungsstelle geschliffen war, während die andere Fläche ungeschliffen war.

Die verschiedenen Tests und Mikroschliffuntersuchungen im Bereich der Verbindungsstellen zeigen, daß eine reine Paste immer dann, wenn der Fügespalt zwischen den beiden zu verbindenden Flächen größer als 80 um war, nicht garantieren kann, daß eine Umwandlung des gesamten, infiltrierten Siliziums in Siliziumkarbid erfolgt. Dies ist offensichtlich darauf zurückzuführen, daß im Bereich der Paste nach dem Pyrolysieren keine ausreichende Mikrorißstruktur gebildet wird, die eine Infiltration in allen Bereichen der Zwischenschicht zuläßt und daß dadurch keine ausreichende Reaktion mit dem Kohlenstoff-Material erfolgt, um Siliziumkarbid zu bilden. Aus diesem Grund wurden in den Fügespalt dann, wenn Spaltbreiten, d.h. der Abstand zwischen den beiden Verbindungsflächen, größer als 80 um eingestellt wurden, zusätzliche Kohlenstoff-Fasern in die Paste eingebracht. Damit sind auch sehr große Fertigungstoleranzen von miteinander zu verbindenden Bauteilkomponenten ausgleichbar. In Bezug auf die Einbringung von Kohlenstoff-Fasern in den Fügespalt hat es sich als vorteilhaft erwiesen, immer dann, wenn Fügespalte größer als etwa 80 µm an der Verbindungsstelle auftreten, die Einbringung von Kohlenstoff-Faserfilz von Vorteil ist, während in noch größere Spaltbreiten, etwa ab 150 µm, Gewirke oder Gewebe aus Kohlenstoff-Fasern zu guten Haftfestigkeits-Ergebnissen führen.

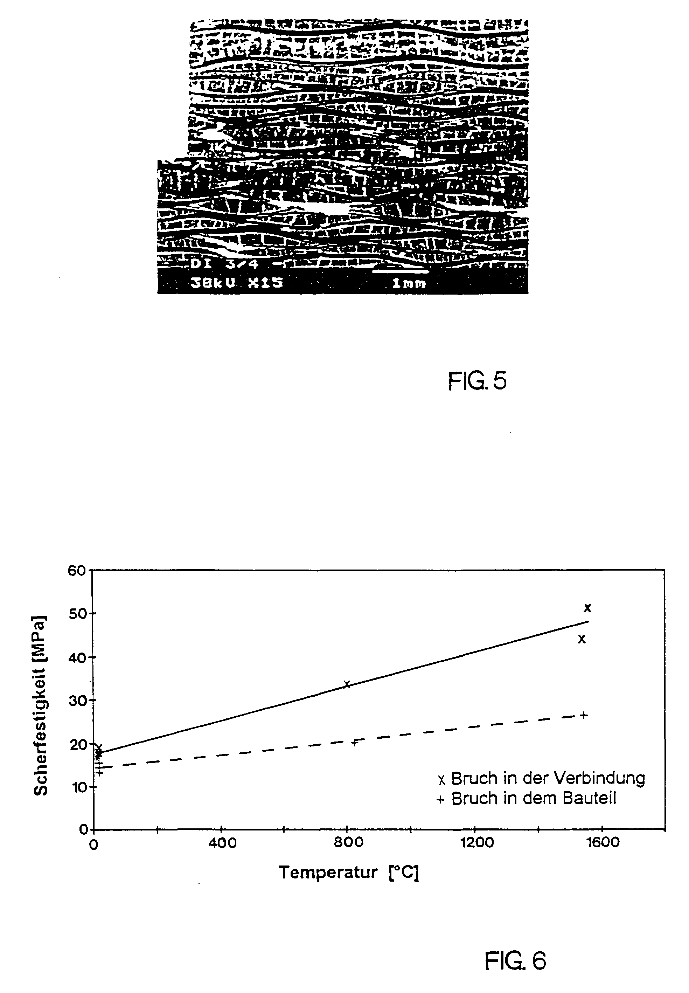

Es wurde die Erkenntnis erlangt, daß bei Fügespalten unterhalb einer Breite von 80 um, in die nur die Paste eingebracht wird, das gebildete Mikrorißsystem die gewünschte Struktur zeigt, während bei größeren Fügespalten eine homogene Rißstruktur erreicht wurde, wenn zusätzlich beispielsweise eine Kohlenstoff-Gewebeeinlage eingelegt wurde, wie dies auch in Figur 5 zu ersehen ist.

Die Versuche in Bezug auf die Einbringung von Kohlenstoff-Fasern in die Paste bzw. in den Fügespalt wurden zum einen mit Kohlenstoffgewebe bzw. -gewirke durchgeführt, bei denen reine Kohlenstoff-Fasern eingesetzt wurden, wobei das Gewebe bzw. Gewirke eine Dicke von 0,25 mm besaß. Zum anderen wurde ein Filz, aus kurzen Fasen hergestellt, eingesetzt, der eine Dicke von 0,15 mm besaß. Die jeweiligen Faserkörper wurden mit der Paste, wie sie vorstehend in der Tabelle 2 angegeben ist, imprägniert. Anschließend wurde das Verfahren, wie eingangs beschrieben, durchgeführt.

Wie die Balkendarstellung der Figur 4 zeigt, wurde eine geringe Erhöhung in der Scherfestigkeit derjenigen, verbundenen Bauteilkomponenten beobachtet, deren Oberflächen vor der Verbindung geschliffen wurden, wie ein Vergleich der jeweiligen Balken "A" oder "B" oder "C" jeweils miteinander zeigt. Diese Erhöhung war auch trotz Zusatz von Kohlenstoff-Faserverstärkungen, entweder als eine Gewebeschicht oder als eine Filzschicht, zu der Paste zu beobachten (Balken "B" bzw. "C"). Im Gegensatz dazu zeigten Untersuchungen, die bei Bauteilkomponenten durchgeführt wurden, deren Oberflächen nicht vor dem Verbinden geschliffen waren, die also eine relativ hohe Oberflächenrauhigkeit im Gegensatz zu geschliffenen Oberflächen zeigten, eine Verringerung der Haftfestigkeit im Bereich der Verbindungsstelle mit reiner Paste, während die Hinzufügung von Kohlenstoff-Fasern eine Erhöhung der Scherfestigkeit ergab. Die besten Ergebnisse wurden dann erzielt, wenn eine geschliffene und eine ungeschliffene Oberfläche miteinander verbunden wurden, sowohl nur mit Paste als auch mit einem Kohlenstoff-Faserfilz und einem Kohlenstoff-Fasergewebe. Die höchste Scherfestigkeit konnte in Verbindung mit einer geschliffenen und einer ungeschliffenen Oberfläche mit einer mit Paste getränkten Einlage aus einem Kohlenstoff-Fasergewebe erreicht werden.

Die Elektronenmikroskopversuche, die durchgeführt wurden, zeigten, daß sich die Filz- oder Gewebeschichten, die mit Paste getränkt waren, besser der Kontur der Bauteilkomponente anlegen konnten, wenn die Oberflächen nicht geschliffen wurden, was zu einer homogeneren und festeren Verbindung führte. Allerdings zeigte sich, daß noch ein gewisser Anteil an ungefüllten Poren und nicht zu Siliziumkarbid reagiertem Silizium innerhalb der Verbindung bei denjenigen Bauteilkomponenten vorhanden war, deren Verbindungsflächen im Bereich der Verbindungsstelle beide geschliffen oder beide ungeschliffen waren. Dagegen erbrachte eine Verbindung mit einer Gewebeschicht und einer Paste als Verbindungsmaterial eine Verbindung, die von unreagiertem Silizium frei war und im wesentlichen keine Poren zeigte.

Diese Verbindungstechnik erbrachte bei Raumtemperatur die höchsten Scherwerte, wie dies auch in der Darstellung der Figur 4 ersichtlich ist. Die Mikrostruktur eines solchen Bauteils ist in Figur 5 dargestellt. Es ist zu erkennen, daß eine sehr homogene Struktur zwischen den beiden Bauteilkomponenten und der Verbindungsstelle selbst gebildet ist, so daß die Verbindungsschicht praktisch nicht zu erkennen ist. Die dunkleren Flächenbereiche in diesem Bild sind das Kohlenstoff-Gewebe (im Bereich der Verbindungsstelle und die Kohlenstoff-Matrix im Bereich der verbundenen Bauteile). Die helleren Flächenbereiche sind Siliziumkarbid, das während der Silizierung gebildet ist. Die Gewebeschicht paßt sich gut in die nicht geschliffene Oberfläche der beiden Bauteilkomponenten an, so daß die Verbindungsschicht eine Kohlenstoff-Siliziumkarbid-Struktur entsprechend den Materialien der Bauteilkomponenten ergibt. Wie bereits ausgeführt, wird mit der Einfügung der Kohlenstoff-Gewebeschicht in das Verbindungsmaterial die höchste Scherfestigkeit erzielt, wobei dies zunächst unabhängig von der Oberflächenbehandlung ist; wird allerdings die Oberfläche geeignet präpariert, kann die Festigkeit noch weiter erhöht werden.

Schließlich wurden Proben von Bauteilkomponenten, die verbunden waren, und zwar mit Paste als Verbindungsmaterial, in Bezug auf ihre Scherfestigkeit bei Raumtemperatur, bei 800°C und bei 1.500°C getestet. Die Versuchsergebnisse sind in Figur 6 dargestellt, allerdings nur unter Verwendung von Paste ohne den Zusatz von Kohlenstoff-Fasern. Die unterbrochene Linie wurde mit der Standardanordnung durchgeführt, wie sie anhand der Figur 1 erläutert wurde. Ein Ausfall der Verbindung konnte nicht beobachtet werden, vielmehr trat die Abscherung bei den Versuchen im Bereich der Bauteilkomponente selbst auf. Um dennoch die Scherfestigkeit der Verbindung selbst testen zu können, mußte die Belastung, die auch bei den Bauteilkomponenten jeweils bei dem Scherversuch einwirkte, reduziert werden, wozu, im Gegensatz zu der Anordnung der Figur 1, der überlappende Bereich der miteinander verbundenen Bauteilkomponenten von 20 mm auf 10 mm reduziert wurde, so daß auf die Verbindungsstelle selbst eine höhere Scherkraft ausgeübt wurde. Die Meßergebnisse sind durch die durchgezogene Linie in Figur 6 dargestellt. Es zeigt sich eine lineare Abhängigkeit der Scherfestigkeit von der Temperatur. Die Scherfestigkeit erhöhte sich, wie die Figur 6 zeigt, von 17 auf 51 MPa, was dem 3-fachen bei den höchsten Temperaturtests entspricht. Dies kann als Folge der thermischen Fehlanpassung zwischen den unterschiedlichen thermischen Ausdehnungskoeffizienten des Verbindungsmaterials und des Kohlenstoff-Kohlenstoff-Karbidmaterials erklärt werden. Als Folge nimmt die Höhe der inneren Beanspruchungen innerhalb der Bauteilkomponenten mit sich erhöhender Testtemperatur ab. Die Stärke der Kohlenstoff-Siliziumkarbid-Verbindung zeigt ihre höchsten Werte bei etwa 1.500°C, wobei diese Testtemperatur in demselben Bereich liegt, wie die Temperatur, die bei der Silizierung (nämlich bei 1.500°C) angewandt wird.

## Patentansprüche

1. Verfahren zum dauerhaften Verbinden von wenigstens zwei Bauteilkomponenten zu einem Formkörper, bei dem eine kohlenstoffhaltige Paste zwischen die zu verbindenden Bauteilkomponenten eingebracht und ein Kohlenstoffskelett bildend erhitzt wird und dieses Skelett danach bei einer Temperatur oberhalb 1410 °C mit Silizium unter Bildung von Siliziumkarbid durchsetzt wird, wobei
als eine Bauteilkomponente eine kohlenstoff-faserverstärkte Komponente, die ein Mikrorißsystem besitzt, eingesetzt wird, daß die eine Bauteilkomponente zu der anderen Bauteilkomponenten unter Belassung eines Fügespalts ausgerichtet wird, und der Fügespalt bei einer Breite, definiert als der Abstand zwischen den beiden zu verbindenden Flächen, von ≤80 µm mit einer Paste gefüllt wird, die aus einem kohlenstoffhaltigen, organischen Bindemittel mit einem Kohlenstoffgehalt von mindestens 30 Gew-% und Kohlenstoffpulver einer Teilchengröße unterhalb 15 µm besteht, und daß bei einem Fügespalt mit einer Breite oberhalb 80 µm zusätzlich zu der Paste Kohlenstoff-Fasern eingebracht werden, daß danach die Paste einer Temperatur im Bereich von 800 bis 1200 °C zur Ausbildung eines solchen Mikrorißsystems, das demjenigen der kohlenstoff-faserverstärkten Bauteilkomponenten etwa entspricht bzw. analog ist, pyrolisiert und das Mikrorißsystem der pyrolysierten Paste bei einer Temperatur oberhalb des Schmelzpunktes von Silizium mit flüssigem Silizium infiltriert wird, das zu Siliziumkarbid konvertiert wird, und wobei das organische Bindemittel in die Paste mit einem Anteil von über 50 Gew.-%, vorzugsweise im Bereich von 80 - 85 Gew.-%, zugesetzt wird.

2. Verfahren nach Anspruch 1, **dadurch gekennzeichnet, daß** als organisches Bindemittel ein Phenolharz verwendet wird.

3. Verfahren nach Anspruch 1, **dadurch gekennzeichnet, daß** ein Kohlenstoffpulver mit einer Teilchengröße unterhalb 10 µm, jedoch nicht größer als die Hälfte der Breite des Fügespalts, in das organische Bindemittel eingebracht wird.

4. Verfahren nach Anspruch 1, **daduch gekennzeichnet, daß** ein Kohlenstoffpulver mit einer Teilchengröße unterhalb 6 µm in das organische Bindemittel eingebracht wird.

5. Verfahren nach Anspruch 1, **dadurch gekennzeichnet, daß** der Kohlenstoff im Bereich des Fügespalts vor der Pyrolyse so eingestellt wird, daß der gesamte Restkohlenstoff nach der Pyrolyse im Bereich des Fügespalts zwischen 50 und 70 Gew.-% beträgt.

6. Verfahren nach Anspruch 1, **dadurch gekennzeichnet, daß** die Kohlenstoff-Fasern vor ihrer Einbringung in den Fügespalt mit Paste imprägniert werden.

7. Verfahren nach Anspruch 1, **dadurch gekennzeichnet, daß** bei einer Breite des Fügespalts bis etwa 150 um in den Fügespalt die Kohlenstoff-Fasern in Filzform eingebracht werden.

8. Verfahren nach Anspruch 1, **dadurch gekennzeichnet, daß** bei einer Breite des Fügespalts oberhalb 150 um die Kohlenstoff-Fasern in Gewebeform oder Gewirkeform eingebracht werden.

9. Verfahren nach Anspruch 1, **dadurch gekennzeichnet, daß** die Pyrolyse bei einer Temperatur von etwa 900 °C durchgeführt wird.

10. Verfahren nach Anspruch 1 oder Anspruch 9, **dadurch gekennzeichnet, daß** die Pyrolyse unter einer Schutzgasatmosphäre, vorzugsweise einer Stickstoffatmosphäre, durchgeführt wird.

11. Verfahren nach Anspruch 1, **dadurch gekennzeichnet, daß** das flüssige Silizium über die kohlenstoff-faserverstärkte Bauteilkomponente zugeführt wird.

12. Verfahren nach Anspruch 1, **dadurch gekennzeichnet, daß** die Infiltration des flüssigen Siliziums unter Vakuum durchgeführt wird.

13. Verfahren nach Anspruch 12, **dadurch gekennzeichnet, daß** die Infiltration unter Aufrechterhaltung eines Drucks von höchstens 10⁻³ - 10⁻⁶ bar (100 - 0,1 Pa) durchgeführt wird.

14. Verfahren nach einem der Ansprüche 1 bis 13, **dadurch gekennzeichnet, daß** vor der Pyrolysierung die Paste, die Bauteilkomponenten zueinander fixierend, getrocknet oder gehärtet wird.

15. Verfahren nach Anspruch 14, **dadurch gekennzeichnet, daß** die Trocknung oder Härtung der Paste bei einer Temperatur von 100 °C bis 150 °C erfolgt.

16. Verfahren nach Anspruch 15, **dadurch gekennzeichnet, daß** die Trocknung oder Härtung für 60 bis 120 Minuten durchgeführt wird.

17. Verfahren nach Anspruch 1, **dadurch gekennzeichnet, daß** die Pyrolysierung der Paste und die Infiltration des flüssigen Siliziums unmittelbar hintereinander in einem Verfahrensschritt erfolgt.

18. Verfahren nach Anspruch 1, **dadurch gekennzeichnet, daß** mindestens eine der zu verbindenden Flächen geglättet wird.

19. Verfahren nach Anspruch 1, **dadurch gekennzeichnet, daß** als andere Bauteilkomponente eine kohlenstoff-faserverstärkte Bauteilkomponente eingesetzt wird, die ein Mikrorißsystem besitzt.

20. Verfahren nach Anspruch 1 oder Anspruch 7, **dadurch gekennzeichnet, daß** in den Fügespalt die Kohlenstoff-Fasern als Filzlage eingebracht werden die mit einer Filzlage, aus der mindestens eine Bauteilkomponente aufgebaut ist, artgleich ist.

21. Verfahren nach Anspruch 1 oder Anspruch 8, **dadurch gekennzeichnet, daß** in den Fügespalt die Kohlenstoff-Fasern als Gewebe- oder Gewirkelage eingefügt sind, die eine solche ist, die mit einer Gewebe- oder Gewirkelage, aus der die mindestens eine Bauteilkomponente aufgebaut ist, artgleich ist.

22. Verfahren nach Anspruch 1, **dadurch gekennzeichnet, daß** die zu verbindenden Bauteilkomponenten zusammen mit dem Silizium-Infiltrationsschritt der Schicht des Fügespalts mit Silizium infiltriert werden.

## Claims

1. Method for permanently joining at least two structural components together to form a molded body, in which a carbon-containing paste is introduced between the structural components to be joined and heated to form a carbon skeleton and this skeleton then being impregnated with silicon at a temperature above 1,410°C to form silicon carbide, wherein as one of the structural components a carbon fiber-reinforced component with a system of microcracks is used, wherein one of the structural components is aligned with respect to the other structural component in such a way as to leave a joint gap and the joint gap, with a width, defined as the distance between the two surfaces to be bonded, of ≤ 80 µm, is filled with a paste which consists an organic, carbon-containing binder with a carbon content of at least 30 wt.-% and carbon powder with a particle size of less than 15 µm, and that in the case of a joint gap with a width of greater than 80 µm, carbon fibers are introduced in addition to the paste that the paste is then pyrolyzed at a temperature in the range of 800-1,200°C to form a system of microcracks which corresponds approximately or is analogous to that of the carbon fiber-reinforced structural component and that the system of mircocracks of the pyrolyzed paste is infiltrated with liquid silicon at a temperature above the melting point of silicon, the silicon thus being converted to silicon carbide and where the organic binder is added to the paste in an amount of more than 50 wt.-%, preferably in an amount in the range of 80-85 wt.-%.

2. Method according to Claim 1, **characterized in that** a phenolic resin is used as the organic binder.

3. Method according to Claim 1, **characterized in that** a carbon powder with a particle size of less than 10 µm, but not greater than half the width of the joint gap, is introduced into the organic binder.

4. Method according to Claim 1, **characterized in that** a carbon powder with a particle size of less than 6 µm is introduced into the organic binder.

5. Method according to Claim 1, **characterized in that** the carbon in the area of the joint gap is adjusted before pyrolysis in such a way that the total amount of residual carbon remaining in the area of the joint gap after pyrolysis is between 50 and 70 wt.-%.

6. Method according to Claim 1, **characterized in that** the carbon fibers are impregnated with paste before they are introduced into the joint gap.

7. Method according to Claim 1, **characterized in that**, in cases where the joint gap is up to about 150 µm wide, the carbon fibers are introduced into the joint gap in the form of a felt.

8. Method according to Claim 1, **characterized in that**, in cases where joint gap is more than 150 µm wide, the carbon fibers are introduced in the form of a woven or knitted material.

9. Method according to Claim 1, **characterized in that** pyrolysis is carried out at a temperature of approximately 900°C.

10. Method according to Claim 1 or Claim 9, **characterized in that** pyrolysis is carried out under a protective gas atmosphere, preferably under a nitrogen atmosphere.

11. Method according to Claim 1, **characterized in that** the liquid silicon is supplied via the carbon fiber-reinforeced structural component.

12. Method according to Claim 1, **characterized in that** the infiltration with liquid silicon is carried out under vacuum.

13. Method according to Claim 12, **characterized in that** the infiltration is carried out under a vacuum of 10⁻³ - 10⁻⁶ bar (100-0.1 Pa) at most.

14. Method according to one of Claims 1 to 13, **characterized in that**, before it is pyrolyzed, the paste is dried or cured in such a way that it holds the structural components together.

15. Method according to Claim 14, **characterized in that** the drying or curing of the paste is carried out at a temperature of 100°C to 150°C.

16. Method according to Claim 15, **characterized in that** the drying or curing is carried out for 60 to 120 minutes.

17. Method according to Claim 1, **characterized in that** the pyrolysis of the paste and the infiltration with liquid silicon are carried out in immediate succession as a single process step.

18. Method according to Claim 1, **characterized in that** at least one of the surfaces to be connected is smoothed.

19. Method according to Claim 1, **characterized in that** a carbon fiber-reinforced structurai component with a system of microcracks is used as the other structural component.

20. Method according to Claim 1 or Claim 7, **characterized in that** the carbon fibers are introduced into the joint gap in the form of a layer of felt, which is similar in nature to the felt layer of which at least one of the structural components consists.

21. Method according to Claim 1 or Claim 8, **characterized in that** the carbon fibers are introduced into the joint gap in the form of a layer of woven or knitted material, which is similar in nature to the woven or knitted layer of which at least one of the structural components consists.

22. Method according to Claim 1, **characterized in that** the structural components to be joined are infiltrated with silicon at the same time as the silicon infiltration step of the layer in the joint gap.

## Revendications

1. Procédé pour la jonction durable d'au moins deux composants structurels en un corps conformé, dans lequel on introduit une pâte carbonée entre les composants structurels à relier et on la chauffe pour former un squelette de carbone, et ce squelette est alors imprégné de silicium à une température supérieure à 1410°C en formant du carbure de silicium, dans lequel on utilise pour l'un des composants structurels un composant renforcé de fibres de carbone qui possède un système de micro-fissuration, on oriente l'un des composants structurels par rapport à l'autre composant structurel en laissant un intervalle de jointure, et on remplit l'intervalle de jointure, présentant une largeur définie comme étant la distance entre les deux surfaces à relier, ≤ 80 µm, avec une pâte qui est constituée en un liant organique carboné d'une teneur en carbone d'au moins 30 % en poids et en carbone en poudre d'une taille de particules inférieure à 15 µm, et pour un intervalle de jointure d'une largeur supérieure à 80 µm, on introduit des fibres de carbone en supplément à la pâte, ensuite on pyrolyse la pâte à une température de l'ordre de 800 à 1200°C pour réaliser un système de micro-fissuration tel qu'il correspond approximativement ou qu'il est analogue à celui du composant structurel renforcé de fibres de carbone, et on infiltre du silicium liquide au système de micro-fissuration de la pâte pyrolysée à une température supérieure au point de fusion du silicium, ledit silicium liquide étant converti en carbure de silicium, et on ajoute le liant organique à la pâte avec une proportion de plus de 50 % en poids, de préférence de l'ordre d'environ 80 à 85 % en poids.

2. Procédé selon la revendication 1, **caractérisé en ce que** l'on utilise à titre de liant organique une résine au phénol.

3. Procédé selon la revendication 1, **caractérisé en ce que** l'on ajoute au liant organique du carbone en poudre d'une taille de particules inférieure à 10 µm, mais pas supérieure à la moitié de la largeur de l'intervalle de jointure.

4. Procédé selon la revendication 1, **caractérisé en ce que** l'on ajoute au liant organique du carbone en poudre d'une taille de particules inférieure à 6 µm.

5. Procédé selon la revendication 1, **caractérisé en ce qu'**avant la pyrolyse, on dose le carbone au niveau de l'intervalle de jointure de telle sorte que la totalité du carbone résiduel après la pyrolyse au niveau de l'intervalle de jointure est comprise entre 50 et 70 % en poids.

6. Procédé selon la revendication 1, **caractérisé en ce qu'**avant d'introduire les fibres de carbone dans l'intervalle de jointure, on les imprègne de pâte.

7. Procédé selon la revendication 1, **caractérisé en ce que** pour une largeur de l'intervalle de jointure jusqu'à environ 150 µm, on introduit dans l'intervalle de jointure les fibres de carbone sous forme de feutre.

8. Procédé selon la revendication 1, **caractérisé en ce que** pour une largeur de l'intervalle de jointure supérieure à 150 µm, on introduit les fibres de carbone sous forme tissée ou tricotée.

9. Procédé selon la revendication 1, **caractérisé en ce que** l'on effectue la pyrolyse à une température d'environ 900°C.

10. Procédé selon la revendication 1 ou selon la revendication 9, **caractérisé en ce que** l'on effectue la pyrolyse dans une atmosphère de gaz inerte, de préférence dans une atmosphère d'azote.

11. Procédé selon la revendication 1, **caractérisé en ce que** l'on ajoute le silicium liquide via le composant structurel renforcé de fibres de carbone.

12. Procédé selon la revendication 1, **caractérisé en ce que** l'on effectue l'infiltration du silicium liquide sous vide.

13. Procédé selon la revendication 12, **caractérisé en ce que** l'on effectue l'infiltration en maintenant une pression de 10⁻³ à 10⁻⁶ bar (100 à 0,1 Pa) au maximum.

14. Procédé selon l'une quelconque des revendications 1 à 13, **caractérisé en ce qu'**avant la pyrolyse, on fait sécher ou durcir la pâte en fixant les composants structurels l'un sur l'autre.

15. Procédé selon la revendication 14, **caractérisé en ce que** le séchage ou le durcissement de la pâte s'effectue à une température de 100°C à 150°C.

16. Procédé selon la revendication 15, **caractérisé en ce que** le séchage ou le durcissement s'effectue pendant 60 à 120 minutes.

17. Procédé selon la revendication 1, **caractérisé en ce que** l'on effectue la pyrolyse de la pâte et l'infiltration du silicium liquide immédiatement l'une après l'autre dans une seule étape de procédé.

18. Procédé selon la revendication 1, **caractérisé en ce que** l'on lisse l'une au moins des surfaces à relier.

19. Procédé selon la revendication 1, **caractérisé en ce que** l'on utilise comme autre composant structurel un composant structurel renforcé de fibres de carbone qui possède un système de micro-fissuration.

20. Procédé selon la revendication 1 ou selon la revendication 7, **caractérisé en ce que** l'on introduit dans l'intervalle de jointure les fibres de carbone en tant que couche de feutre qui est identique à une couche de feutre à partir de laquelle est conçu l'un au moins des composants structurels.

21. Procédé selon la revendication 1 ou selon la revendication 8, **caractérisé en ce que** l'on introduit dans l'intervalle de jointure les fibres de carbone en tant que couche tissée ou tricotée qui est une couche de type égal à la couche tissée ou tricotée à partir de laquelle est conçu l'un au moins des composants structurels.

22. Procédé selon la revendication 1, **caractérisé en ce que** l'on infiltre avec du silicium les composants structurels à relier conjointement avec l'étape d'infiltration de silicium de la couche de l'intervalle de jointure.
